# EUROPÄISCHE PATENTSCHRIFT

(11) **EP 4 094 577 B1**
(45) Veröffentlichungstag und Bekanntmachung des Hinweises auf die Patenterteilung: **28.01.2026**
(21) Anmeldenummer: 22170108.9
(22) Anmeldetag: 26.04.2022
(51) Int. Cl.: A01M 7/00

(54) **LANDWIRTSCHAFTLICHE FELDSPRITZE UND SPRITZVORRICHTUNG FÜR EINE LANDWIRTSCHAFTLICHE FELDSPRITZE SOWIE VERFAHREN ZUR ANPASSUNG EINER SPRITZVORRICHTUNG FÜR EINE REIHENBEZOGENE AUSBRINGUNG VON SPRITZFLÜSSIGKEIT**
AGRICULTURAL FIELD SPRAYER AND SPRAY DEVICE FOR AN AGRICULTURAL FIELD SPRAYER AND METHOD OF ADAPTING A SPRAY DEVICE FOR APPLICATION OF SPRAY LIQUID IN ROWS
PULVÉRISATEUR AGRICOLE ET DISPOSITIF PULVÉRISATEUR POUR UN PULVÉRISATEUR AGRICOLE, AINSI QUE PROCÉDÉ D' AJUSTEMENT D' UN DISPOSITIF PULVÉRISATEUR POUR UNE DISTRIBUTION PAR RANGÉ E DU LIQUIDE DE PULVÉRISATION

(30) Priorität: 03.05.2021 DE 102021111357
(43) Veröffentlichungstag der Anmeldung: 30.11.2022
(73) Patentinhaber: HORSCH LEEB Application Systems GmbH, 94405 Landau an der Isar (DE)
(72) Erfinder: Stangl, Josef, 92421 Schwandorf (DE)
(74) Vertreter: v. Bezold & Partner Patentanwälte - PartG mbB

(56) Entgegenhaltungen:
- EP-A1- 2 995 382
- DE-A1- 102018 126 586
- US-A1- 2018 343 849
- US-B2- 7 311 004

## Beschreibung

Die Erfindung betrifft eine Spritzvorrichtung für eine landwirtschaftliche Feldspritze zum dosierten Ausbringen von Spritzflüssigkeit auf landwirtschaftlichen Nutzflächen. Die Erfindung betrifft ferner eine landwirtschaftliche Feldspritze mit einer solchen Spritzvorrichtung sowie ein Verfahren zur Anpassung einer Spritzvorrichtung für eine reihenbezogene Ausbringung von Spritzflüssigkeit.

Landwirtschaftliche Feldspritzen werden zum Ausbringen bzw. zur Applikation von flüssigen Wirkstoffen, z. B. Pflanzenschutz- und/oder Düngemittel, verwendet. Derartige Feldspritzen mit einem quer zur Fahrtrichtung orientierten und über einen Pflanzenbestand bewegten Spritzgestänge sind in unterschiedlichen Ausführungsvarianten bekannt.

Mit derartigen Feldspritzen soll das Ziel verfolgt werden, ein definiertes Flüssigkeitsvolumen an Spritzflüssigkeit, z. B. Pflanzenschutz- und/oder Düngemittel, gleichmäßig und mit definierbarer Intensität auf einem Pflanzenbestand auszubringen. Um die Spritzflüssigkeit großflächig auf den zu bearbeitenden Nutzflächen auszubringen, weisen Spritzgestänge derartiger Feldspritzen seitliche faltbare Ausleger mit großer Arbeitsbreite auf, teilweise von mehr als zwanzig Metern. Für Transportfahrten werden solch breite Spritzgestänge gefaltet und eingeklappt. Im ausgeklappten Zustand sind die Ausleger quer zur Fahrtrichtung angeordnet. Am Spritzgestänge sind zum dosierten Ausbringen der Spritzflüssigkeit in Abständen zueinander angeordnete Ausbringelemente, z. B. Spritzdüsen, vorhanden. Die Ausbringelemente erzeugen einen zum Boden bzw. zum Pflanzenbestand hin ausgerichteten Spritzstrahl, z. B. einen Sprühkegel, zum gewünschten Verteilen der Spritzflüssigkeit.

Bei der Ausbringung von Spritzflüssigkeit auf eine landwirtschaftliche Nutzfläche ist es je nach Spritzvorgang von Vorteil, wenn die Spritzflüssigkeit in die unmittelbare Umgebung der jeweiligen Pflanzen auf der landwirtschaftlichen Nutzfläche abgegeben wird. Da die Aussaat einer Vielzahl von landwirtschaftlichen Nutzpflanzen entlang von Saatreihen erfolgt, bilden sich auf der landwirtschaftlichen Nutzfläche während der Wachstumsphase der Nutzpflanzen Pflanzenreihen aus. Eine besonders effektive und wirksame Ausbringung von Spritzflüssigkeit kann entsprechend durch eine reihenbezogene Spritzflüssigkeitsausbringung realisiert werden, so dass die Spritzflüssigkeit im Wesentlichen entlang von Ausbringstreifen ausgebracht wird, wobei die Ausbringstreifen entlang von Pflanzenreihen verlaufen. Eine reihenbezogene Ausbringung von Spritzflüssigkeit entlang von Ausbringstreifen wird auch als Bandspritzen oder Bandapplikation bezeichnet im Unterschied zur ganzflächigen Applikation von Spritzflüssigkeit.

Bei den aus der Praxis bekannten Spritzvorrichtungen sind die Ausbringelemente in einem vorbestimmten Düsenrasterabstand, der üblicherweise 25 cm oder 50 cm beträgt, in Längsrichtung des Spritzgestänges beabstandet voneinander angeordnet. Wenn nun der Abstand der Pflanzenreihen von diesem Düsenrasterabstand oder einem ganzzahlig Vielfachen hiervon abweicht, ist keine auf die Pflanzenreihe optimal angepasste reihenbezogene Ausbringung von Spritzflüssigkeit möglich.

Aus der Offenlegungsschrift EP 3 649 857 A1 ist ein Ansatz bekannt, bei dem Pflanzenreihen auf landwirtschaftlichen Nutzflächen sensorisch erfasst werden können und bei dem Ausbringelemente in Abhängigkeit von den erfassten Pflanzenreihen durch eine Aktorik quer zur Fahrtrichtung bzw. in Längsrichtung des Spritzgestänges positioniert werden können. Nachteilig hieran ist, dass eine entsprechende kostenaufwändige und wartungsanfällige Aktorik vonnöten ist, um die einzelnen Ausbringelemente längs am Spritzgestänge verfahren zu können.

Das Dokument DE 10 2018 126 586 A1 betrifft ein landwirtschaftliches Spritzgerät mit mehreren Ausbringelementen, welche an einem Spritzgestänge angeordnet sind. Die Ausbringelemente sind dazu eingerichtet, Spritzflüssigkeit auf eine landwirtschaftliche Nutzfläche auszubringen. Mittels einer Verstelleinrichtung ist der Auftreffbereich der von einer oder mehreren Ausbringelementen abgegebenen Spritzflüssigkeit auf der landwirtschaftlichen Nutzfläche während des Ausbringvorgangs veränderbar.

Zum weiteren allgemeinen Stand der Technik wird verwiesen auf die Dokumente EP 2 995 382 A1 und US 7 311 004 B2.

Es ist somit eine Aufgabe der Erfindung, eine verbesserte Technik zum Ausbringen von Spritzflüssigkeit mittels eines Spritzgestänges bereitzustellen, mittels der Nachteile herkömmlicher Techniken vermieden werden können. Die Aufgabe der Erfindung ist es insbesondere, eine Technik zum Ausbringen von Spritzflüssigkeit mittels eines Spritzgestänges bereitzustellen, mittels welcher eine kosteneffiziente und präzise reihenbezogene Ausbringung von Spritzflüssigkeit entlang von Ausbringstreifen ermöglicht wird.

Die Aufgabe wird gelöst durch die Merkmale des unabhängigen Anspruchs. Vorteilhafte Weiterbildungen sind in den abhängigen Ansprüchen und der Beschreibung angegeben.

Ein erster allgemeiner Gesichtspunkt der Erfindung betrifft eine Spritzvorrichtung für eine landwirtschaftliche Feldspritze zum dosierten Ausbringen von Spritzflüssigkeit auf landwirtschaftlichen Nutzflächen, vorzugsweise zur reihenbezogenen Bandspritzung.

Die Spritzvorrichtung umfasst ein Spritzgestänge, aufweisend mehrere Ausbringelemente zum Versprühen und/oder Feinverteilen der Spritzflüssigkeit, die in einem vorbestimmten Düsenrasterabstand in Längsrichtung des Spritzgestänges beabstandet voneinander angeordnet sind. Die Ausbringelemente sind vorzugsweise Spritzdüsen.

Die Spritzvorrichtung ist so ausgebildet, dass während eines Ausbringvorgangs von Spritzflüssigkeit die von den Ausbringelementen abgegebene Spritzflüssigkeit Auftreffbereiche erzeugt, die ein Reihenraster bilden, dessen Reihenrasterabstand sich vom Düsenrasterabstand oder von einem ganzzahligen Vielfachen des Düsenrasterabstands unterscheidet. Zur Erzeugung des unterschiedlichen Reihenrasterabstands ist zumindest ein Teil der mehreren Ausbringelemente jeweils mit einer Düsenkappe ausgestattet, die ausgebildet ist, in Längsrichtung des Spritzgestänges einen Versatz, d. h. eine Verschiebung, eines Auftreffbereichs von Spritzflüssigkeit zu erzeugen.

Anders ausgedrückt weist die Spritzvorrichtung eine Ausstattung mit Düsenkappen auf, die bewirkt, dass die im Spritzbetrieb von den Ausbringelementen erzeugten Auftreffbereiche der Spritzstrahlen ein Reihenraster bilden, dessen Reihenrasterabstand von einem Abstand benachbarter Austreffbereiche verschieden ist, den die Ausbringelemente ohne die Düsenkappen erzeugen würden. Mittels der Düsenkappen kann somit eine unterschiedliche Rasterbreite zwischen einem Düsenraster und einem Reihenraster einer zu behandelnden Pflanzenreihe ausgeglichen werden. Auf eine kostenintensive und wartungsanfällige Aktorik zum Verfahren der Ausbringelemente längs des Spritzgestänges kann verzichtet werden. Die Düsenkappen sind bevorzugt lösbar an den Ausbringelementen montiert.

Unter Auftreffbereichen, die ein Reihenraster bilden, wird eine Verteilung der Auftreffbereiche in Längsrichtung des Spritzgestänges verstanden, bei der benachbarte Auftreffbereiche den gleichen Abstand voneinander haben. Dieser Abstand, der einem Abstand der Mittelpunkte zweier benachbarter Auftreffbereiche entspricht, wird als Reihenrasterabstand bezeichnet. Das mittels der Düsenkappen erzeugte Reihenraster kann disjunkte (sich nicht überlappende) Auftreffbereiche oder sich überlappende Auftreffbereiche umfassen.

Die Düsenkappen können jeweils ausgebildet sein, zur Erzeugung des Versatzes eine von dem Ausbringelement gerade nach unten ausgebrachte Spritzflüssigkeit derart abzulenken, dass ein Spritzstrahl mit einer schräg nach unten gerichteten Strahlrichtung erzeugt wird.

Die Ausbringelemente erzeugen im Spritzbetrieb jeweils einen Spritzstrahl. Ein Spritzstrahl hat eine Strahlrichtung und ein Strahlprofil. So hat ein sich konisch ausbreitender Spritzstrahl ein kegelförmiges Strahlprofil und eine Strahlrichtung, die durch die Achse des Spritzkegels festgelegt ist. Die Strahlrichtung entspricht somit der Mittelachse des Strahlprofils oder anders ausgedrückt der Mittelachse des Spritzstrahls. Das Strahlprofil erzeugt bei Auftreffen auf den Boden den Auftreffbereich.

Mittels der Düsenkappen kann somit die Strahlrichtung in Bezug auf die Längsrichtung des Spritzgestänges verändert werden (im Vergleich zu der Strahlrichtung, die vom Ausbringelement ohne Düsenkappe erzeugt wird) und auf diese Weise einen Versatz des Auftreffbereiches erzeugen. Anders ausgedrückt erzeugen diese Düsenkappen einen Ablenkwinkel der Strahlrichtung. Der Ablenkwinkel ist der Winkel zwischen der Strahlrichtung des von den Düsenkappen austretenden Spritzstrahls zur Vertikalen bzw. zur Strahlrichtung, die ohne Düsenkappen durch die Spritzdüsen erzeugt würde.

In einer Ausführungsform umfassen die Düsenkappen mindestens eine erste Gruppe von Düsenkappen und eine zweite Gruppe von Düsenkappen, wobei die Düsenkappen der ersten Gruppe ausgebildet sind, in Längsrichtung des Spritzgestänges einen ersten Versatz des Auftreffbereichs von Spritzflüssigkeit zu erzeugen, der sich von einem zweiten Versatz, der mittels der Düsenkappen der zweiten Gruppe erzeugbar ist, unterscheidet. Mit anderen Worten unterscheidet sich der Ablenkwinkel der Düsenkappen der ersten Gruppe vom Ablenkwinkel der Düsenkappen der zweiten Gruppe.

Die Spritzvorrichtung ist somit mit mindestens zwei unterschiedlichen Arten von Düsenkappen ausgestattet, die sich in der Größe des erzeugten Ablenkwinkels und des Versatzes der resultierenden Auftreffbereiche unterscheiden. In einer Ausführungsvariante werden zur Verschiebung der jeweiligen Auftreffbereiche nur zwei unterschiedliche Gruppen bzw. Arten von Düsenkappen verwendet. Dies ist besonders vorteilhaft, um mit einer möglichst geringen Variantenvielfalt an Düsenkappen das Düsenraster an ein gewünschtes hiervon abweichendes Reihenraster anpassen zu können.

In einer vorteilhaften Ausführungsvariante dieser Ausführungsform ist mittels der Düsenkappen der ersten Gruppe ein Versatz von 5 cm oder ein Versatz in einem Bereich von 0 bis 5 cm erzeugbar, wenn das Spritzgestänge jeweils einen bestimmten vertikalen Abstand vom Boden aufweist. Alternativ oder zusätzlich ist mittels der Düsenkappen der zweiten Gruppe ein Versatz von 10 cm oder ein Versatz in einem Bereich von 5 bis 10 cm erzeugbar, wenn das Spritzgestänge jeweils einen bestimmten vertikalen Abstand vom Boden aufweist. Dies ist besonders vorteilhaft im Hinblick auf einen üblichen Düsenrasterabstand von 25cm, mit dem die Ausbringelemente in Längsrichtung des Spritzgestänges beabstandet voneinander angeordnet sein können, da mit diesen beiden Gruppen das von der Spritzvorrichtung erzeugbare Spritzmuster an übliche, hiervon abweichende Reihenabstände von Reihenkulturen anpassbar ist, was nachfolgend noch detaillierter erläutert wird.

In einer weiteren Ausführungsform kann die Spritzvorrichtung eine dritte Gruppe von Düsenkappen aufweisen, wobei mittels der Düsenkappen der dritten Gruppe ein Versatz von 15 cm oder ein Versatz in einem Bereich von 10 bis 15 cm erzeugbar ist. Hierdurch ergeben sich zusätzliche Optionen, um das erzeugbare Spritzmuster anzupassen.

In einer Ausführungsform sind die Düsenkappen jeweils wahlweise in einer ersten Montageposition am Ausbringelement und in einer zur ersten Montageposition um 180° Grad gedrehten, zweiten Montageposition am Ausbringelement montierbar, wobei die Düsenkappen in der ersten Montageposition einen positiven Versatz und in der zweiten Montageposition einen negativen Versatz des Auftreffbereichs in Längsrichtung des Spritzgestänges erzeugen. Dies bietet den Vorteil, dass mit der gleichen Düsenkappe zwei unterschiedliche Verschiebungsrichtungen (oder zwei entgegengesetzte Ablenkungen der Strahlrichtungen) in Bezug auf die Längsrichtung des von einem Ausbringelement erzeugbaren Auftreffbereichs der Spritzflüssigkeit erzeugbar sind, je nachdem, ob die Düsenkappe in der ersten oder zweiten Montageposition montiert ist. Dies reduziert die Variantenvielfalt unterschiedlicher Düsenkappen, die benötigt werden, um die Spritzvorrichtung an unterschiedliche Reihenabständen anpassen zu können.

In einer Ausführungsform ist die Spritzvorrichtung ausgebildet, mittels der Ausstattung von bzw. mit Düsenkappen Spritzstrahlen zu erzeugen, die Spritzstrahlen mit einer gerade nach unten gerichteten Strahlrichtung und Spritzstrahlen mit in Bezug auf die Längsrichtung schräg nach unten gerichteter Strahlrichtung umfassen. Hierbei können die Spritzstrahlen mit schräg nach unten gerichteter Strahlrichtung Spritzstrahlen umfassen, die einen positiven und negativen Versatz der Auftreffbereiche und/oder unterschiedliche große Versätze der Auftreffbereiche bewirken.

Gemäß einem weiteren Aspekt können die Düsenkappen der ersten Gruppe und der zweiten Gruppe jeweils Düsenkappen umfassen, die in der ersten Montageposition montiert sind und Düsenkappen umfassen, die in der zweiten Montageposition montiert sind. Hierdurch wird eine besonders vorteilhafte Anpassung an einen von einem Düsenrasterabstand abweichenden Reihenrasterabstand ermöglicht. Ferner besteht die Möglichkeit, dass auch die Düsenkappen der dritten Gruppe, sofern vorhanden, jeweils Düsenkappen umfassen, die in der ersten Montageposition montiert sind und Düsenkappen umfassen, die in der zweiten Montageposition montiert sind.

In einer weiteren Ausführungsform sind die Ausbringelemente oder zumindest die mit Düsenkappen ausgestatteten Ausbringelemente drehbar am Spritzgestänge gehaltert zur Einstellung des von der Düsenkappe erzeugten Versatzes oder Breite eines Strahlprofils in einem vorbestimmten Bereich. Die Ausbringelemente können hierzu beispielsweise in einem Düsenträger (auch als Düsenstock bezeichnet) drehbar gehaltert sein. Die Ausbringelemente können hierbei um eine in Fahrtrichtung verlaufende Achse drehbar gehaltert sein zum Verstellen des Versatzes und/oder um eine Vertikalachse drehbar gehaltert sein zur Verstellung eine Breite des Strahlprofils, z. B. bei Flachstrahldüsen. Entsprechend erhöhen sich die Möglichkeiten, die Auftreffbereiche anzupassen.

Die Düsenkappen können beispielsweise mittels eines Klick-, Rast- und/oder Bajonett-Verschlusses lösbar an einem Ausbringelement montierbar sein.

In einer weiteren Ausführungsform sind mehrere Ausbringelemente in unterschiedlichen Rastund/oder Klick-Stellungen drehbar am Düsenträger gehaltert zur Einstellung des Versatzes mittels der unterschiedlichen Rast- und/oder Klick-Stellungen. Hierbei können den unterschiedlichen Rastund/oder Klick-Stellungen jeweils unterschiedlich große Verschiebungen der Auftreffbereiche in Längsrichtung zugeordnet sein. Dies erleichtert die flexible Anpassung des Versatzes einzelner Ausbringelemente.

In einer Ausführungsvariante dieser Ausführungsform ist am Düsenträger oder am Ausbringelement eine Skala angebracht, anhand derer eine eingestellte Drehstellung und/oder ein eingestellter Versatz ablesbar ist. Dies erleichtert die korrekte Einstellung des gewünschten Versatzes und vermeidet Fehlbedienungen.

In einer weiteren Ausführungsform weist die Spritzvorrichtung Mehrfachdüsenträger (auch als Mehrfachdüsenstücke bezeichnet) auf, in denen mindestens zwei Ausbringelemente gehaltert sind. Die mindestens zwei Ausbringelemente können mit unterschiedlichen Düsenkappen ausgestattet sein zur Erzeugung eines unterschiedlichen Versatzes des Auftreffbereichs - je nachdem welche der beiden Ausbringelemente für den Spritzbetrieb ausgewählt wird. Alternativ kann von den mindestens zwei Ausbringelementen eines ohne Düsenkappe ausgestattet sein oder mit einer Düsenkappe ausgestattet sein, die keinen Versatz des Auftreffbereichs in Längsrichtung erzeugt.

Diese Ausführungsformen bieten den Vorzug, dass zur Anpassung des Versatzes das Ausbringelement nicht erst mit der Düsenkappe im Rahmen einer Umrüstung ausgestattet werden muss, sondern dass das entsprechend geeignete Ausbringelement im Mehrfachdüsenstock für den Spritzbetrieb ausgewählt werden kann. Dadurch kann eine schnellere Anpassung der Konfiguration der Spritzvorrichtung erzielt werden.

In einer weiteren Ausführungsform weist die Spritzvorrichtung eine Bedieneinheit mit einem Bildschirm auf. Die Bedieneinheit ist dazu ausgebildet, am Bildschirm das Anzeigen einer Benutzerschnittstelle zum Konfigurieren der Spritzvorrichtung für eine reihenbezogene Ausbringung zu bewirken. Die Bedieneinheit kann ein Bedienterminal der Spritzvorrichtung sein oder ein Mobilgerät, wie z. B. ein Tablet-Computer. Hierbei ist die Benutzerschnittstelle zur Eingabe von Eingabe-Parametern ausgebildet. Die Eingabe-Parameter umfassen, zusätzlich zu einem Reihenabstand als Eingabe-Parameter, zumindest einen der folgenden weiteren Eingabe-Parameter: einen Düsenrasterabstand, eine Fahrspurbreite, eine Arbeitsbreite der Feldspritze, ein zu behandelnder Pflanzenbestand, eine Wachstumsphase des zu behandelnden Pflanzenbestands und einen Parameter, der angibt, ob zusätzlich Spritzflüssigkeit zwischen den Reihen ausgebracht werden soll.

Anhand dieser Eingabe-Parameter oder zumindest einem Teil hiervon kann ein Spritzmuster für eine reihenbezogene Ausbringung von Spritzflüssigkeit festgelegt werden, das mittels der Spritzvorrichtung erzeugt werden soll und entsprechend eine hierfür benötigte Konfiguration der Ausbringelemente mit Düsenkappen, die das gewünschte Spritzmuster erzeugen kann.

Die Benutzerschnittstelle ist ferner zur Ausgabe einer Konfiguration der Ausbringelemente ausgebildet, wobei die Konfiguration eine in Abhängigkeit von den Eingabe-Parametern ermittelte Ausstattung des zumindest einen Teils der Ausbringelemente mit den Düsenkappen für die reihenbezogene Ausbringung angibt. Entsprechend kann einem Benutzer der Spritzvorrichtung mitgeteilt werden, welche Ausstattung mit Düsenkappen für die geplante reihenbezogene Ausbringung vonnöten ist.

Beispielsweise kann die ausgegebene Konfiguration Umbauhinweise für einen Benutzer zur Verwendung der Düsenkappen enthalten, um die Spritzvorrichtung an die reihenbezogene Anwendung anzupassen. Alternativ oder zusätzlich kann die ausgegebene Konfiguration eine schematische visuelle Darstellung der mittels der Konfiguration erzeugbaren reihenbezogenen Ausbringung von Spritzflüssigkeit enthalten. Dies erleichtert einem Benutzer die Umrüstung der Spritzvorrichtung für eine reihenbezogene Ausbringung von Spritzflüssigkeit (Bandapplikation) und erhöht die Bediensicherheit.

Ferner kann in der Bedieneinheit oder in einer mit der Bedieneinheit in Signalverbindung stehenden Steuereinrichtung der Feldspritze eine Konfigurationsfunktion hinterlegt sein. Mittels der Konfigurationsfunktion kann anhand der eingegebenen Werte für die Eingabe-Parameter die Konfiguration der Spritzvorrichtung für die reihenbezogene Ausbringung festgelegt werden, wobei insbesondere festgelegt wird, welche der Ausbringelemente jeweils mit was für einer Düsenkappe ausgestattet werden sollen und ferner optional die Montageposition der Düsenkappe festgelegt wird.

In einer weiteren Ausführungsform weist die Spritzvorrichtung ein Dosier- und/oder Versorgungssystem zur Versorgung der Ausbringelemente mit Spritzflüssigkeit auf. Das Dosierund/oder Versorgungssystem kann einen oder mehrere Vorratsbehälter für Spritzflüssigkeit, eine Förderpumpe und eine Zufuhrleitung zur Versorgung der Ausbringelemente mit Spritzflüssigkeit aufweisen. Die Spritzvorrichtung kann ferner eine Steuereinrichtung, z. B. ein Steuergerät, umfassen, die ausgebildet ist, für die reihenbezogene Ausbringung von Spritzflüssigkeit das Dosier- und/oder Versorgungssystem und/oder die Ausbringelemente in Abhängigkeit von der Konfiguration der Ausbringelemente zu steuern und/oder zu regeln. Hierbei kann die Steuereinrichtung beispielsweise ein Dosierventil oder eine Blende ansteuern, das/die einem Ausbringelement oder einer Gruppe von Ausbringelementen zugeordnet ist.

Die Konfiguration kann beispielsweise festlegen, dass nur mit einem Teil der Ausbringelemente Spritzflüssigkeit ausgebracht wird, z. B. um zwischen den Pflanzenreihen keine Spritzflüssigkeit auszubringen. Alternativ kann zwischen den Pflanzenreihen eine andere Spritzflüssigkeit ausgebracht werden.

Die Erfindung betrifft ferner eine landwirtschaftliche Verteilmaschine, vorzugsweise Feldspritze, umfassend eine Spritzvorrichtung wie sie in diesem Dokument beschrieben ist. Die landwirtschaftliche Verteilmaschine, vorzugsweise Feldspritze, kann eine selbstfahrende oder eine mittels eines Zugfahrzeugs gezogene oder eine an ein Zugfahrzeug angebaute Verteilmaschine sein.

Gemäß einem zweiten allgemeinen Gesichtspunkt der Erfindung wird ein Verfahren zur Anpassung einer Spritzvorrichtung für eine reihenbezogene Ausbringung von Spritzflüssigkeit bereitgestellt. Hierbei ist die Spritzvorrichtung eine Spritzvorrichtung für eine landwirtschaftliche Feldspritze zum dosierten Ausbringen von Spritzflüssigkeit auf landwirtschaftlichen Nutzflächen, umfassend mehrere Ausbringelemente zum Versprühen und/oder Feinverteilen der Spritzflüssigkeit, die in einem vorbestimmten Düsenraster in Längsrichtung eines Spritzgestänges beabstandet voneinander angeordnet sind.

Das Verfahren kann eine Anpassung der Spritzvorrichtung umfassen, um beispielsweise ausgehend von einer Konfiguration der Ausbringelemente, die eine ganzflächige Applikation von Spritzflüssigkeit ermöglicht, eine Konfiguration der Ausbringelemente bereitzustellen, die eine Ausbringung von Spritzflüssigkeit entlang von Bandapplikationsstreifen, die vorzugsweise entlang von in Fahrtrichtung verlaufenden Pflanzenreihen verlaufen, ermöglicht.

Das Verfahren bzw. die Anpassung zeichnet sich dadurch aus, dass Auftreffbereiche der von den Ausbringelementen während eines Ausbringvorgangs abgegebenen Spritzflüssigkeit angepasst werden an ein Reihenraster der reihenbezogenen Ausbringung. Diese Anpassung erfolgt, indem ein Versatz in Längsrichtung des Spritzgestänges von Auftreffbereichen von Spritzflüssigkeit mittels Düsenkappen erzeugt wird. Hierzu kann beispielsweise zumindest ein Teil der mehreren Ausbringelemente zur Ausstattung mit Düsenkappen ausgewählt werden, d.h. es wird festgelegt, welche der Ausbringelemente mit Düsenkappen ausgestattet werden müssen, um deren Auftreffbereich zwecks Anpassung an einen gewünschten Reihenrasterabstand zu verschieben. Hierzu sind die Düsenkappen so ausgebildet, dass eine unterschiedliche Rasterbreite zwischen einem Düsenraster und einem Reihenraster ausgeglichen wird.

Alternativ oder zusätzlich kann zur Anpassung der Auftreffbereich zumindest ein Teil der mehreren Ausbringelemente zur Ausstattung mit Düsenkappen ausgewählt werden und die Düsenkappen so ausgebildet sein, dass eine Beabstandung der angepassten Auftreffbereiche einem Reihenabstand einer Pflanzenreihe entspricht und/oder dass eine Beabstandung der angepassten Auftreffbereiche und/oder ein Reihenabstand der reihenbezogenen Ausbringung weder 25 cm oder 50 cm noch ein ganzzahlig Vielfaches hiervon beträgt.

Zur Vermeidung von Wiederholungen sollen rein vorrichtungsgemäß offenbarte Merkmale auch als verfahrensgemäß offenbart gelten und beanspruchbar sein und umgekehrt. Die vorgenannten Aspekte und erfindungsgemäßen Merkmale, insbesondere im Hinblick auf die Ausbildung der Spritzvorrichtung gelten somit auch für die im Zusammenhang mit dem Verfahren offenbarte Spritzvorrichtung.

Ferner sind folgende weiteren Aspekte offenbart:
Die Ausbringelemente können separat ansteuerbar sein, um diese für den Spritzbetrieb einzeln einund ausschalten zu können. Das Ausbringelement kann hierzu ein Schaltventil (Dosierventil) oder eine steuerbare Blende zur Steuerung des Durchflusses umfassen.

Das Spritzgestänge kann um eine in Fahrtrichtung verlaufende Schwenkachse (A) bewegbar an einem Trägerfahrzeug mittelbar oder unmittelbar angeordnet sein. Das Spritzgestänge ist vorzugsweise ein schwenkbares Spritzgestänge, welches zwei seitliche Ausleger aufweist. Jeder Ausleger sowie das Mittelteil weist Ausbringelemente zum Versprühen und/oder Feinverteilen der Spritzflüssigkeit auf. Die zwei seitlichen Ausleger können jeweils über eine vertikale Schwenkachse drehbar mit einem Mittelteil des Spritzgestänges verbunden sein.

Jeder Ausleger kann wiederum mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges gefaltet, vorzugsweise mehrfach gefaltet, werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze.

Das Spritzgestänge der Spritzvorrichtung und/oder der Feldspritze weist eine hohe Arbeitsbreite auf, d. h. eine Arbeitsbreite, die wesentlich größer als eine Breite des Trägerfahrzeugs oder der Feldspritze ist, z. B. ein Vielfaches der Breite des Trägerfahrzeugs. Die Feldspritze kann in an sich bekannter Weise eine Stelleinrichtung, z. B. Pneumatik- oder Hydraulikzylinder, umfassen, mittels der eine Stellkraft erzeugbar ist, um das Verteilergestänge um die Schwenkachse zu bewegen. Zur beweglichen Halterung am Trägerfahrzeug kann das Spritzgestänge beispielsweise an einem Träger gelagert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist.

Am Ausleger kann jeweils mindestens ein Abstandssensor zur Messung eines Abstands zum Boden oder Pflanzenbestand angeordnet sein, z. B. in Form eines Ultraschallsensors. Die Feldspritze und/oder das Spritzgestänge kann in an sich bekannter Weise ferner mindestens eine Sensoreinrichtung zur Erfassung einer Drehlage und/oder eine Drehgeschwindigkeit und/oder eine Beschleunigung des Verteilergestänges umfassen, z. B. einen Beschleunigungssensor.

Unter der Längsrichtung des Spritzgestänges wird hier die Richtung verstanden, in der sich das Spritzgestänge bzw. die Ausleger im ausgeklappten Zustand erstreckt und in der die Ausbringelemente, z. B. die Spritzdüsen, entlang des Spritzgestänges beabstandet zueinander angeordnet sind. Die Arbeitsbreite des Spritzgestänges ergibt sich aus der Länge des Spritzgestänges entlang dessen Längsrichtung im ausgeklappten Zustand. Unter der Vertikalrichtung der Ausleger bzw. des Spritzgestänges wird die Richtung verstanden, die senkrecht zur Längsrichtung des Auslegers ist und senkrecht zu einer Fahrtrichtung der Feldspritze ist. Allgemein soll in diesem Dokument der Begriff "Steuern" auch ein Regeln umfassen. Entsprechend soll in diesem Dokument der Begriff "Steuereinrichtung" auch eine Regeleinrichtung umfassen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer landwirtschaftlichen Feldspritze mit einer Spritzeinrichtung;
- Figur 2: eine schematische Illustration einer Anpassung einer Spritzvorrichtung für eine reihenbezogene Ausbringung mittels Düsenkappen gemäß einer Ausführungsform;
- Figur 3: eine Ausstattung von Ausbringelementen mit Düsenkappen gemäß einer Ausführungsform;
- Figur 4: eine schematische Ansicht einer Bedieneinheit und Benutzerschnittstelle zur Anpassung einer Spritzvorrichtung für eine reihenbezogene Ausbringung gemäß einer Ausführungsform; und
- Figur 5: eine schematische Ansicht einer Ausgabe einer Konfiguration zur Anpassung einer Spritzvorrichtung für eine reihenbezogene Ausbringung gemäß einer Ausführungsform.

Gleiche oder funktional äquivalente Elemente sind in den Figuren zum Teil mit denselben Bezugszeichen bezeichnet und zum Teil nicht gesondert beschrieben.

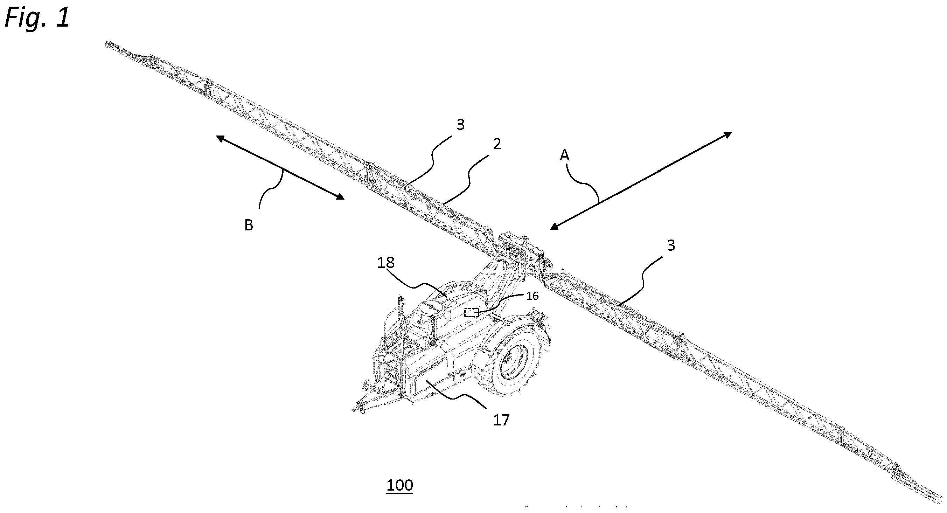

Figur 1 zeigt in einer Perspektivansicht eine Ausführungsvariante einer landwirtschaftlichen Feldspritze 100. Die Feldspritze 100 ist hier beispielhaft als eine gezogene Feldspritze ausgeführt. Im hinteren Bereich umfasst die Feldspritze 100 ein sich in einer Arbeitsstellung befindendes und sich in großer Arbeitsbreite, z. B. 24 Meter oder mehr, quer zur Fahrtrichtung erstreckendes Spritzgestänge 2, das um eine sich in Fahrtrichtung erstreckende Schwenkachse A mittels einer Stelleinrichtung, z. B. mittels hydraulisch betätigter Verstellzylinder, verschwenkbar ist. Das Spritzgestänge 2, auch als Spritzbalkenanordnung bezeichnet, ist mittels eines höhenverstellbaren Parallelogrammgestänges höhenverstellbar gegenüber dem Trägerfahrzeug 17. Ferner ist am Trägerfahrzeug 17 ein Vorratstank 18 für Spritzflüssigkeit angebracht.

Das Spritzgestänge 2 umfasst ein Mittelteil und zwei seitliche Ausleger 3, die jeweils eine Mehrzahl von Ausbringelementen zum Versprühen und/oder Feinverteilen der Spritzflüssigkeit aufweisen. Die Längsrichtung des Spritzgestänges ist in Figur 1 mit dem Pfeil B gekennzeichnet. Ferner ist eine Steuereinrichtung 16 vorgesehen, die in Signalverbindung mit den einzelnen Komponenten der Spritzvorrichtung steht, wie den Ausbringelemente, Pumpen, Ventilen, Durchflussmessern, um diese zur Ausbringung von Spritzflüssigkeit entsprechend zweckmäßig anzusteuern.

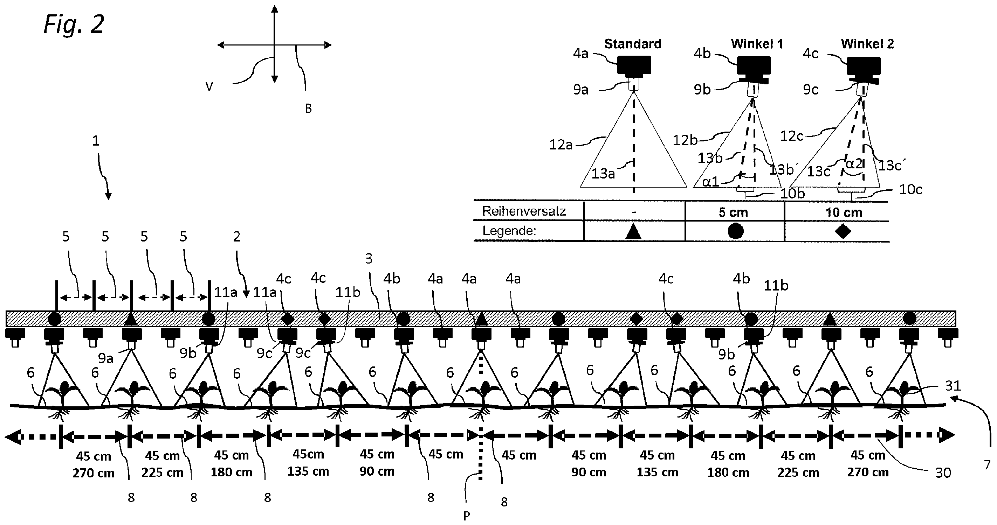

Figur 2 zeigt eine schematische Illustration einer Anpassung einer Spritzvorrichtung für eine reihenbezogene Ausbringung mittels Düsenkappen gemäß einer Ausführungsform.

Figur 2 zeigt in der unteren Darstellung eine Hinter-Teilansicht eines Auslegers 3 der Spritzvorrichtung 1 gemäß einer Ausführungsform. Am Spritzgestänge 2, insbesondere an jedem der Ausleger 3 sowie dem Mittelteil der Spritzvorrichtung 1, sind mehrere Ausbringelemente 4a, 4b, 4c zum Versprühen und/oder Feinverteilen der Spritzflüssigkeit gehaltert, die in einem vorbestimmten Düsenrasterabstand 5, der hier 25 cm beträgt, in Längsrichtung B des Spritzgestänges 2 beabstandet voneinander angeordnet sind. Die Ausbringelemente 4a, 4b, 4c sind im gezeigten Ausführungsbeispiel in Düsenträgern gehalterte Spritzdüsen. Die Ausbringelemente 4a, 4b, 4c werden daher nachfolgend als Spritzdüsen 4a, 4b, 4c bezeichnet.

Die Spritzdüsen 4a, 4b, 4c sind oder können baugleich ausgeführt sein. Die unterschiedlichen Bezugszeichen 4a, 4b, 4c werden verwendet, um zu kennzeichnen, dass die Spritzdüsen mit unterschiedlichen Düsenkappen 9a, 9b, 9c ausgestattet sind.

Für den hier in Figur 2 nicht dargestellten Fall, dass auf allen Spritzdüsen 4a, 4b, 4c solche Düsenkappen 9a montiert wären, die einen gerade nach unten gerichteten Spritzstrahl erzeugen, und alle im Abstand von 25cm angeordneten Spritzdüsen bei einem Ausbringvorgang zum Ausbringen von Spritzflüssigkeit aktiviert werden, würde die Spritzvorrichtung eine ganzflächige Applikation von Spritzflüssigkeit bewirken, d. h. die Auftreffbereiche der einzelnen Spritzstrahlen hätten einen mittleren Abstand, der dem Düsenrasterabstand von 25 cm entsprechen würde. Die Erzeugung eines derartigen Spritzmusters ist an sich aus dem Stand der Technik bekannt.

Figur 2 illustriert nun ein Verfahren zur Anpassung einer solchen Spritzvorrichtung für eine reihenbezogene Ausbringung von Spritzflüssigkeit gemäß einem Ausführungsbeispiel, sowie ferner eine entsprechend angepasste Spritzvorrichtung 1 gemäß einem Ausführungsbeispiel.

Im vorliegenden Beispiel soll die Spritzvorrichtung 1 für eine reihenbezogene Ausbringung von Spritzflüssigkeit entlang von Ausbringstreifen angepasst werden, wobei die Pflanzen bzw. Pflanzenreihen 31 hier beispielhaft in einem Reihenabstand 30 von 45 cm angepflanzt sind. Der Reihenabstand 30 der Pflanzenreihen 31 unterscheidet sich somit vom Düsenrasterabstand 5, der 25 cm beträgt, sowie einem ganzzahlig Vielfachen hiervon.

Für die reihenbezogene Ausbringung von Spritzflüssigkeit entlang dieser Pflanzenreihen 31 soll somit mit der Spritzvorrichtung 1 ein Reihenraster 7 mit einem Reihenrasterabstand 8 von 45 cm erzeugt werden. Die Auftreffbereiche 6 der von den Spritzdüsen 4a, 4b, 4c während eines Ausbringvorgangs abgegebenen Spritzflüssigkeit werden an dieses gewünschte Reihenraster 7 zur reihenbezogenen Ausbringung angepasst, indem ein Versatz in Längsrichtung B des Spritzgestänges 2 der Auftreffbereiche 6 mittels Düsenkappen erzeugt wird. Hierbei wird zumindest ein Teil der Spritzdüsen 4a, 4b und 4c mit Düsenkappen ausgestattet.

Die Düsenkappen werden lösbar auf den Spritzdüsen montiert, z. B. mittels eines Bajonett-Verschlusses. So sind die mit dem Bezugszeichen 4b gekennzeichneten Spritzdüsen mit einer Düsenkappe 9b ausgestattet, die in Längsrichtung B des Spritzgestänges 2 einen Versatz 10b eines Auftreffbereichs 6 von Spritzflüssigkeit 11 erzeugen, der 5cm beträgt, wenn sich das Spritzgestänge bzw. der Ausleger 3 in einem bestimmten Abstand vom Boden befindet. Dies ist in der schematischen Darstellung rechts oben in Figur 2 illustriert.

Die Düsenkappen 9b sind ausgebildet, zur Erzeugung des Versatzes von 5 cm eine von der Spritzdüse ausgebrachte Spritzflüssigkeit derart abzulenken, dass ein Spritzstrahl 12b mit einer schräg nach unten gerichteten Strahlrichtung 13b erzeugt wird. Die Düsenkappen erzeugen somit einen ersten Ablenkwinkel α1. Ohne die Düsenkappe 9b würde die Spritzdüse 4b einen gerade nach unten gerichteten Spritzstrahl erzeugen mit einer Strahlrichtung 13b'. Der Ablenkwinkel α1 entspricht somit dem Winkel zwischen der Strahlrichtung 13b und der Vertikalen bzw. dem Winkel zwischen der Strahlrichtung 13b und der Strahlrichtung 13b' ohne Düsenkappe.

Eine Düsenkappe 9b verschiebt daher den Auftreffbereich 6 um 5 cm nach links in Längsrichtung B in Bezug auf einen bestimmten vertikalen Abstand des Spritzgestänges vom Bodenbereich. Die Düsenkappe 9b erzeugt einen positiven Versatz 10b von 5cm, falls diese in einer ersten Montageposition an der Spritzdüse 4b montiert ist. Die Düsenkappe 9b kann jedoch auch um 180° Grad gedreht auf der Spritzdüse 4b montiert werden (zweite Montageposition) und verschiebt in dieser Montageposition den Auftreffbereich entsprechend nach rechts in Längsrichtung B, d. h. die Düsenkappe 9b erzeugt dann einen negativen Versatz 10b von 5cm bei gleicher Ausbringhöhe. Lediglich zur besseren Übersichtlichkeit sind in der unteren Darstellung der Fig. 2 die Stellen, an denen Spritzdüsen 4b mit Düsenkappen 9b ausgestattet sind mit einem gefüllten Kreis als Legende markiert, da aus Gründen der Übersichtlichkeit nicht alle Spritzdüsen und Düsenkappen mit Bezugszeichen versehen sind.

Es ist ersichtlich, dass entlang des Spritzgestänges mehrere Spritzdüsen 4b vorgesehen sind, die mit Düsenkappen 9b in der ersten Montageposition als auch in der zweiten Montageposition ausgestattet sind.

Die auf den Spritzdüsen 4c montierten Düsenkappen 9c sind dagegen ausgebildet, einen größeren Versatz des Auftreffbereichs 6 zu erzeugen als die Düsenkappen 9b. Die Düsenkappen 9c erzeugen eine doppelt so großen Versatz 10c, der hier 10 cm beträgt in Bezug auf einen bestimmten vertikalen Abstand des Spritzgestänges 2 vom Boden. Zur Erzeugung des Versatzes von 10 cm ist die Düsenkappe 9c entsprechend ausgebildet, eine von der Spritzdüse 4c gerade nach unten ausgebrachte Spritzflüssigkeit um einen zweiten Ablenkwinkel α2 abzulenken, der größer als α1 ist. Ohne die Düsenkappe 9c würde die Spritzdüse 4c einen gerade nach unten gerichteten Spritzstrahl erzeugen mit einer Strahlrichtung 13c', z. B. wenn die Spritzdüse 4c mit einer Düsenkappe 9a, die keinen Versatz erzeugt, ausgestattet wäre. Wie in der der schematischen Darstellung rechts oben in Figur 2 gut erkennbar ist, wird die Strahlrichtung 13c' durch die Düsenkappe 9c stärker abgelenkt als durch die Düsenkappe 9b.

Die Düsenkappe 9c verschiebt den Auftreffbereich 6 um 10cm nach links in Längsrichtung B in Bezug auf einen bestimmten vertikalen Abstand des Spritzgestänges vom Bodenbereich, d. h. die Düsenkappe 9c erzeugt einen positiven Versatz 10c von 10cm, falls diese in einer ersten Montageposition an der Spritzdüse 4c montiert ist. Die Düsenkappe 9c kann jedoch auch um 180° Grad gedreht auf der Spritzdüse 4c montiert werden (zweite Montageposition) und verschiebt in dieser Montageposition den Auftreffbereich stattdessen nach rechts in Längsrichtung B, d. h. die Düsenkappe 9c erzeugt dann einen negativen Versatz 10c von 10cm.

Lediglich zur besseren Übersichtlichkeit sind in der unteren Darstellung der Fig. 2 die Stellen, an denen Spritzdüsen 4c mit Düsenkappen 9c ausgestattet sind mit einer gefüllten Raute als Legende markiert, da aus Gründen der Übersichtlichkeit nicht alle Spritzdüsen und Düsenkappen mit Bezugszeichen versehen sind. Es ist ersichtlich, dass entlang des Spritzgestänges mehrere Spritzdüsen 4c vorgesehen sind, die mit Düsenkappen 9c in der ersten Montageposition als auch in der zweiten Montageposition ausgestattet sind.

An den Spritzdüsen 4a sind keine Düsenkappen montiert oder Düsenkappen 9a, die keine Ablenkung des Spritzstrahles 12a bzw. keine Änderung der Strahlrichtung 13a und somit keinen Versatz des Auftreffbereiches 6 bewirken, was in Figur 2 ebenfalls illustriert ist. Lediglich zur besseren Übersichtlichkeit sind in der unteren Darstellung der Fig. 2 die Stellen, an denen Spritzdüsen 4a ohne Düsenkappen bzw. mit nicht-ablenkenden Düsenkappen 9a angeordnet sind, mit einem gefüllten Dreieck als Legende markiert.

Zusammengefasst erzeugen die Düsenkappen 9b, 9c somit unterschiedlich große Ablenkwinkel α1, α2, d. h. bewirken jeweils eine unterschiedlich starke Änderung der Strahlrichtung des Spritzstrahls durch Ablenken der aus den Spritzdüsen austretenden Spritzflüssigkeit in der Längsrichtung B. Hierzu weisen die Düsenkappen 9b, 9c ein Prallelement auf.

Das Spritzgestänge 2 weist nun in seiner Längsrichtung B eine solche Abfolge von Düsenkappen 9a, 9b, 9c auf, so dass diese die Auftreffbereiche 6 so verändern, dass ein Unterschied im Düsenrasterabstand 5 und dem Reihenabstand 30 ausgeglichen wird bzw. dass eine Beabstandung der angepassten Auftreffbereiche 10 dem Reihenabstand 8 von 45 cm der Pflanzenreihen 31 entspricht.

Für einen Reihenabstand von 45 cm wird dies nachfolgend beispielhaft erläutert:
Mindestens eine Spritzdüse kann immer direkt oberhalb der Pflanzenreihe positioniert werden, was in Figur 2 für die Spritzdüse 4a an der Position P der Fall ist. Bei einem Reihenabstand von 45 cm gibt es dann zu jeder Pflanzenreihe eine Spritzdüse, die in Längsrichtung B entweder direkt oberhalb der Pflanzenreihe positioniert ist (0 cm versetzt), 5 cm versetzt oder 10 cm versetzt ist. Dies gilt allgemein auch für andere üblichen Reihenabstände die größer als 25 cm sind und ein ganzzahlig Vielfaches von 5 cm sind.

Entsprechend muss für jede Pflanzenreihe somit die nächste Spritzdüse ermittelt werden, die in Längsrichtung B den kleinsten Abstand zu dieser Pflanzenreihe aufweist.

Falls die nächste Spritzdüse 5 cm zur Pflanzenreihe versetzt ist, wird mit der Düsenkappe 9b, die den Ablenkwinkel α1 erzeugt, gearbeitet. D. h. die Spritzdüse 4b wird mit einer Düsenkappe 9b ausgestattet, zweckmäßig entweder in der ersten oder der zweiten Montageposition, so dass der Spritzstrahl 12b in Richtung zu dieser Pflanzenreihe abgelenkt wird, bzw. der Auftreffbereich zur Pflanzenreihe hin versetzt wird.

Falls die nächste Spritzdüse 10 cm zur Pflanzenreihe versetzt ist, wird mit der Düsenkappe 9c, die den Ablenkwinkel α2 erzeugt, gearbeitet. D. h. die Spritzdüse 4c wird mit einer Düsenkappe 9c ausgestattet, zweckmäßig entweder in der ersten oder der zweiten Montageposition, so dass der Spritzstrahl 12c in Richtung zu dieser Pflanzenreihe abgelenkt wird, bzw. der Auftreffbereich zur Pflanzenreihe hin versetzt wird.

Falls die nächste Spritzdüse direkt oberhalb der Pflanzenreihe ist, also 0 cm versetzt ist, wird die Standarddüse 4a verwendet oder die Düsenkappe 9a, die keine Ablenkung erzeugt.

Die verbleibenden Spritzdüsen, also diejenigen, die sich im Zwischenbereich der Pflanzenreihe befinden, werden für die reihenbezogene Ausbringung deaktiviert.

Die vorstehend beschriebenen Schritte können auch in Form einer Konfigurationsfunktion abgebildet werden, die in der Spritzvorrichtung hinterlegt wird und die für einen bestimmten Reihenabstand dem Benutzer automatisch die benötigte Ausstattung mit Düsenkappen ausgibt, die für die beabsichtigte Reihenapplikation von Spritzflüssigkeit erforderlich ist.

Eine auf diese Weise mit Düsenkappen ausgestatteten Spritzvorrichtung 1 ermöglicht somit eine reihenbezogene Ausbringung von Spritzflüssigkeit. Mittels der Düsenkappen kann somit jede herkömmliche Spritzvorrichtung auf einfache Weise schnell umgerüstet werden, um anstelle einer ganzflächigen Applikation von Spritzflüssigkeit eine Bandapplikation zu ermöglichen. Wie vorstehend festgestellt wurde, funktioniert dieser Ansatz nicht nur für das hier gezeigte Beispiel eines Reihenabstandes von 45 cm, sondern allgemein auch für andere üblichen Reihenabstände, die größer als 25 cm und ein ganzzahlig Vielfaches von 5 cm sind. Hier unterscheidet sich lediglich die Abfolge, an welcher Stelle in Längsrichtung des Spritzgestänges welche Düsenkappe montiert werden muss.

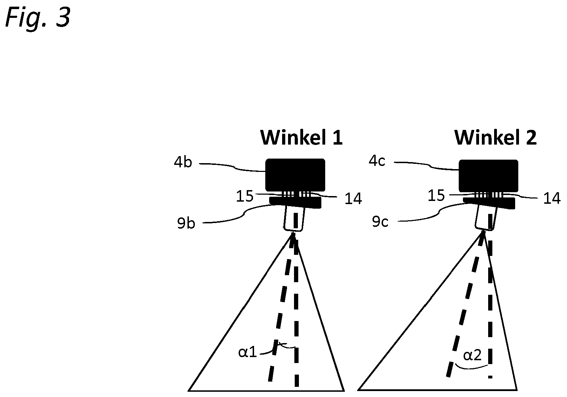

Figur 3 zeigt stark schematisiert eine Ausstattung von Ausbringelementen mit Düsenkappen gemäß einer Ausführungsform. Die Besonderheit dieser Ausführungsform liegt darin, dass mit Düsenkappen 9b, 9c ausgestattete Ausbringelemente 4b, 4c drehbar an Spritzgestänge oder drehbar in einem Düsenträger (nicht dargestellt) gehaltert sind, zur Einstellung des Versatzes 10b, 10c oder einer Breite des Spritzprofils in einem vorbestimmten Bereich. Beispielsweise können die mehreren Spritzdüsen mittels einer Rastverbindung 15 in unterschiedlichen Raststellungen drehbar am Düsenträger gehaltert sein zur Einstellung des Ablenkwinkels α1, α2 und damit des Versatzes 10b, 10c mittels der unterschiedlichen Rast-Stellungen. Hierzu kann am Düsenträger oder am Ausbringelement eine Skala 14 angebracht sein, anhand derer eine eingestellte Drehstellung, ein eingestellter Ablenkwinkel und/oder ein eingestellter Versatz ablesbar ist.

Dies ist besonders vorteilhaft, wenn z. B. mit unterschiedlichen Abständen des Spritzgestänges zum Boden gearbeitet werden soll. Da der von einem Ablenkwinkel α1 oder α2 erzeugte Versatz vom eingestellten Abstand des Spritzgestänges abhängt, kann bei verändertem Abstand die Raststellung und damit der Ablenkwinkel angepasst werden, um den gewünschten Versatz zu erzielen.

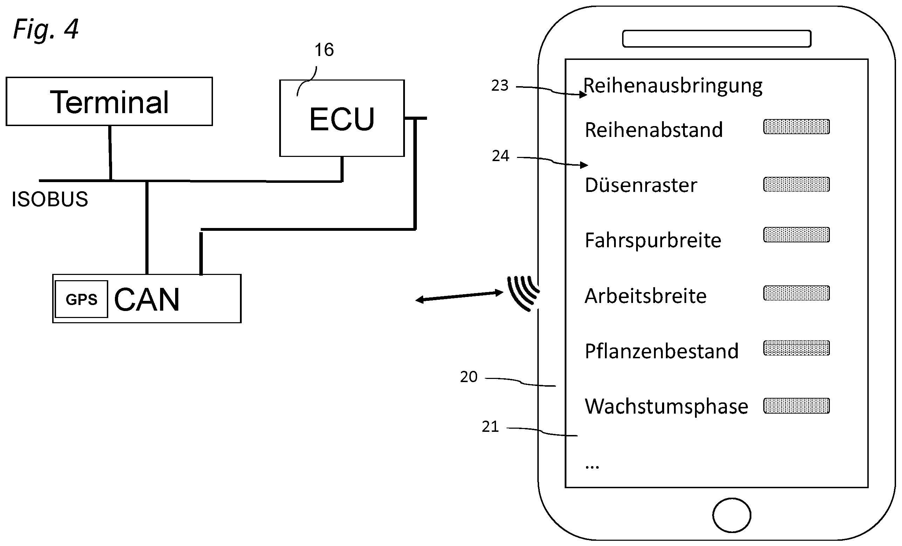

Figur 4 zeigt eine schematische Ansicht einer Bedieneinheit 20 und Benutzerschnittstelle 23 zur Anpassung einer Spritzvorrichtung für eine reihenbezogene Ausbringung gemäß einer Ausführungsform. Die Bedieneinheit 20 hat einen Bildschirm 21 und ist dazu ausgebildet, am Bildschirm 21 das Anzeigen einer Benutzerschnittstelle 23 zum Konfigurieren der Spritzvorrichtung für eine reihenbezogene Ausbringung zu bewirken. Die Bedieneinheit 20 kann ein mobiles Bediengerät, z. B. ein Tablet-Computer sein, der drahtlos in Kommunikationsverbindung mit einem Kommunikationssystem der Feldspritze 100 steht. Das Kommunikationssystem der Feldspritze 100 kann in an sich bekannter Weise einen Datenbus aufweisen, z. B. einen CAN-Datenbus und/oder einen als ISOBUS ausgebildeten Datenbus. Eine Steuereinrichtung 16 und ein Bedienterminal (in Figur 4 als Terminal bezeichnet) stehen in Signalverbindung mit dem Kommunikationssystem.

Die Benutzerschnittstelle 23 ist programmtechnisch zur Eingabe von einem oder mehreren Eingabe-Parametern 24 ausgebildet. Die Eingabe-Parameter 24 umfassen einen Reihenabstand als Eingabe-Parameter, der den Reihenabstand der Pflanzenreihen angibt, für die bevorstehende reihenbezogene Ausbringung von Spritzflüssigkeit. Im Beispiel der Figur 2 könnte der Benutzer somit als Wert 45 cm eingeben. Optional kann die Benutzerschnittstelle ausgebildet sein, weitere Eingabe-Parameter 24 zu erfassen, z. B. einen Düsenrasterabstand, eine Fahrspurbreite, eine Arbeitsbreite der Feldspritze, ein zu behandelnder Pflanzenbestand, eine Wachstumsphase des zu behandelnden Pflanzenbestands und einen Parameter, der angibt, ob zusätzlich Spritzflüssigkeit zwischen den Reihen ausgebracht werden soll.

Anhand dieser Eingabe-Parameter kann für eine reihenbezogene Ausbringung von Spritzflüssigkeit eine hierfür benötigte Konfiguration der Spritzdüsen mit Düsenkappen ermittelt und ausgegeben werden.

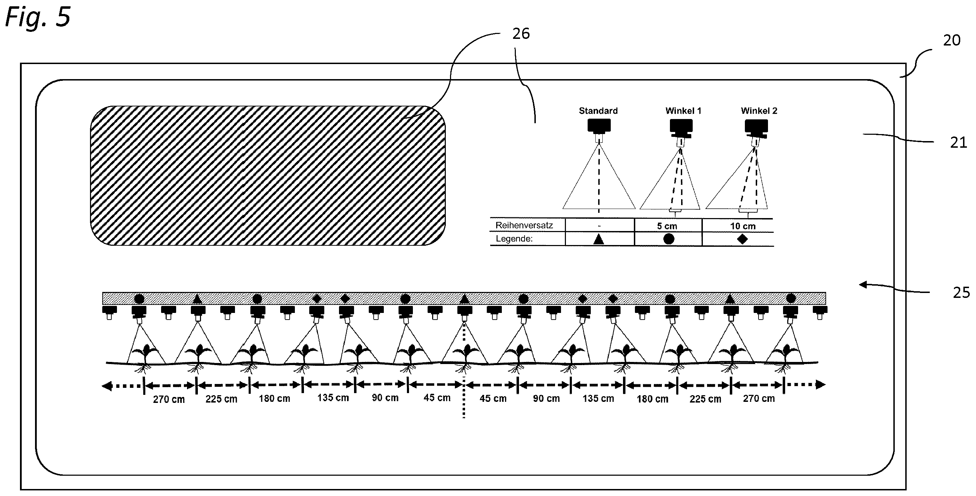

Die Benutzerschnittstelle ist ferner zur Ausgabe dieser Konfiguration 25 der Spritzdüsen ausgebildet, was in Figur 5 schematisch dargestellt ist.

Hierbei kann die Konfiguration 25 eine in Abhängigkeit von den Eingabe-Parametern 24 ermittelte Ausstattung des zumindest einen Teils der Spritzdüsen mit den Düsenkappen für die reihenbezogene Ausbringung angeben. Entsprechend kann einem Benutzer der Spritzvorrichtung 2 mitgeteilt werden, welche Ausstattung mit Düsenkappen für die geplante reihenbezogene Ausbringung vonnöten ist. Diese umfasst eine in Abhängigkeit der Eingabe-Parameter ermittelte benötigte Abfolge der Düsenkappen 9b, 9c und ihre jeweilige Montageposition, wie dies beispielhaft in Zusammenhang mit Figur 2 beschrieben wurde.

Beispielsweise kann die ausgegebene Konfiguration 25 entsprechende Umbauhinweise 26 für einen Benutzer zur Verwendung der Düsenkappen enthalten, um die Spritzvorrichtung an die reihenbezogene Anwendung anzupassen. Alternativ oder zusätzlich kann die ausgegebene Konfiguration eine schematische visuelle Darstellung der mittels der Konfiguration erzeugbaren reihenbezogenen Ausbringung von Spritzflüssigkeit enthalten. Dies erleichtert einem Benutzer die Umrüstung der Spritzvorrichtung für eine reihenbezogene Ausbringung von Spritzflüssigkeit (Bandapplikation) und erhöht die Bediensicherheit.

Ferner kann in der Bedieneinheit 23 oder in einer mit der Bedieneinheit in Signalverbindung stehenden Steuereinrichtung 16 der Feldspritze eine Konfigurationsfunktion hinterlegt sein. Mittels der Konfigurationsfunktion kann anhand der eingegebenen Werte für die Eingabe-Parameter 24 die Konfiguration 25 der Spritzvorrichtung für die reihenbezogene Ausbringung festgelegt werden, wobei insbesondere festgelegt wird, welche der Ausbringelemente jeweils mit was für einer Düsenkappe ausgestatten werden sollen und ferner optional die Montageposition der Düsenkappe festgelegt wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Spritzvorrichtung
- 2: Spritzgestänge
- 3: Ausleger
- 4a: Ausbringelement
- 4b: Ausbringelement
- 4c: Ausbringelement
- 5: Düsenrasterabstand
- 6: Auftreffbereich
- 7: Reihenraster
- 8: Reihenrasterabstand
- 9a, 9c, 9c: Düsenkappe
- 10b, 10c: Versatz
- 11a: Erste Montageposition
- 11b: Zweite Montageposition
- 12a, 12b, 12c: Spritzstrahl
- 13a, 13b, 13c: Strahlrichtung mit Düsenkappe
- 13b', 13c': Strahlrichtung ohne Düsenkappe
- 14: Skala
- 15: Rastverbindung
- 16: Steuereinrichtung
- 17: Trägerfahrzeug
- 18: Vorratstank
- 20: Bedieneinheit
- 21: Bildschirm
- 23: Benutzerschnittstelle
- 24: Eingabe-Parameter
- 25: Konfiguration
- 26: Umbauhinweise
- 30: Reihenabstand der Pflanzenreihe
- 31: Pflanze, Pflanzenreihe
- 100: Landwirtschaftliche Feldspritze
- α1, α2: Ablenkwinkel
- A: Schwenkachse in Fahrtrichtung
- B: Längsrichtung des Auslegers
- V: Vertikalrichtung des Auslegers

## Patentansprüche

1. Spritzvorrichtung (1) für eine landwirtschaftliche Feldspritze (100) zum dosierten Ausbringen von Spritzflüssigkeit auf landwirtschaftlichen Nutzflächen, vorzugsweise zur reihenbezogenen Bandspritzung, umfassend
ein Spritzgestänge (2), aufweisend mehrere Ausbringelemente (4a, 4b, 4c) zum Versprühen und/oder Feinverteilen der Spritzflüssigkeit, die in einem vorbestimmten Düsenrasterabstand (5) in Längsrichtung (B) des Spritzgestänges (2) beabstandet voneinander angeordnet sind,
wobei Auftreffbereiche (6) der von den Ausbringelementen (4a, 4b, 4c) während eines Ausbringvorgangs abgegebenen Spritzflüssigkeit ein Reihenraster (7) bilden, dessen Reihenrasterabstand (8) sich vom Düsenrasterabstand (5) oder von einem ganzzahligen Vielfachen des Düsenrasterabstands (5) unterscheidet, wobei zur Erzeugung des unterschiedlichen Reihenrasterabstands (8) zumindest ein Teil der mehreren Ausbringelemente (4b, 4c) jeweils mit einer Düsenkappe (9b, 9c) ausgestattet ist, die ausgebildet ist, in Längsrichtung (B) des Spritzgestänges (2) einen Versatz (10b; 10c) eines Auftreffbereichs (6) von Spritzflüssigkeit zu erzeugen.

2. Spritzvorrichtung (1) nach Anspruch 1, wobei die Düsenkappen (9b, 9c) mindestens eine erste Gruppe von Düsenkappen (9b) und eine zweite Gruppe von Düsenkappen (9c) umfassen, wobei die Düsenkappen (9b) der ersten Gruppe ausgebildet sind, in Längsrichtung (V) des Spritzgestänges (2) einen ersten Versatz (10b) des Auftreffbereichs (6) von Spritzflüssigkeit zu erzeugen, der sich von einem zweiten Versatz (10c), der mittels der Düsenkappen (9c) der zweiten Gruppe erzeugbar ist, unterscheidet.

3. Spritzvorrichtung (1) nach Anspruch 2, wobei
a) mittels der Düsenkappen (9b) der ersten Gruppe ein Versatz (10b) von 5 cm oder ein Versatz in einem Bereich von 0 bis 5 cm erzeugbar ist; und/oder
b) mittels der Düsenkappen (9c) der zweiten Gruppe ein Versatz (10c) von 10 cm oder ein Versatz in einem Bereich von 5 bis 10 cm erzeugbar ist; und/oder
c) wobei die Düsenkappen eine dritte Gruppe von Düsenkappen aufweisen, wobei mittels der Düsenkappen der dritten Gruppe ein Versatz von 15 cm oder ein Versatz in einem Bereich von 10 bis 15 cm erzeugbar ist.

4. Spritzvorrichtung (1) nach einem der vorherigen Ansprüche, wobei die Düsenkappen (9b, 9c) jeweils wahlweise in einer ersten Montageposition (11a) am Ausbringelement (4b, 4c) und in einer zur ersten Montageposition (11a) um 180° Grad gedrehten, zweiten Montageposition (11b) am Ausbringelement (4b, 4c) montierbar sind, wobei die Düsenkappen (9b, 9c) in der ersten Montageposition (11a) einen positiven Versatz und in der zweiten Montageposition (11b) einen negativen Versatz des Auftreffbereichs (10) in Längsrichtung (B) des Spritzgestänges (2) erzeugen.

5. Spritzvorrichtung (1) nach Anspruch 4, wenn abhängig von Anspruch 2 oder 3, wobei die Düsenkappen (9b, 9c) der ersten Gruppe und der zweiten Gruppe jeweils Düsenkappen (9b, 9c) umfassen, die in der ersten Montageposition (11a) montiert sind und Düsenkappen (9b, 9c umfassen, die in der zweiten Montageposition (11b) montiert sind.

6. Spritzvorrichtung (1) nach einem der vorherigen Ansprüche, wobei die mit Düsenkappen (9b, 9c) ausgestatteten Ausbringelemente (4b, 4c) drehbar in einem Düsenträger gehaltert sind zur Einstellung des Versatzes (10b, 10c) oder einer Breite des Spritzprofils in einem vorbestimmten Bereich.

7. Spritzvorrichtung (1) nach einem der vorherigen Ansprüche, wobei die mehreren Ausbringelemente (4b, 4c) in unterschiedlichen Rast- und/oder Klick-Stellungen drehbar am Düsenträger gehaltert sind zur Einstellung des Versatzes (10b, 10c) mittels der unterschiedlichen Rast- und/oder Klick-Stellungen.

8. Spritzvorrichtung (1) nach Anspruch 6 oder 7, wobei am Düsenträger oder am Ausbringelement eine Skala angebracht ist, anhand derer eine eingestellte Drehstellung und/oder ein eingestellter Versatz ablesbar ist.

9. Spritzvorrichtung (1) nach einem der vorherigen Ansprüche, ferner aufweisend Mehrfachdüsenträger, in denen mindestens zwei Ausbringelemente gehaltert sind,
a) die mit unterschiedlichen Düsenkappen ausgestattet sind, zur Erzeugung eines unterschiedlichen Versatzes des Auftreffbereichs; oder
b) von denen ein Ausbringelement ohne Düsenkappe ausgestattet ist oder mit einer Düsenkappe ausgestattet ist, die keinen Versatz des Auftreffbereichs in Längsrichtung erzeugt.

10. Spritzvorrichtung (1) nach einem der vorherigen Ansprüche, umfassend eine Bedieneinheit (20), aufweisend einen Bildschirm (21), die dazu ausgebildet ist, am Bildschirm (21) das Anzeigen einer Benutzerschnittstelle (23) zum Konfigurieren der Spritzvorrichtung für eine reihenbezogene Ausbringung zu bewirken,
a) wobei die Benutzerschnittstelle zur Eingabe von Eingabe-Parametern (24) ausgebildet ist, zusätzlich zu einem Reihenabstand zumindest einen der folgenden weiteren Eingabe-Parameter zu erfassen: einen Düsenrasterabstand, eine Fahrspurbreite, eine Arbeitsbreite der Feldspritze, ein zu behandelnder Pflanzenbestand, eine Wachstumsphase des zu behandelnden Pflanzenbestands, und einen Parameter, der angibt, ob zusätzlich Spritzflüssigkeit zwischen den Reihen ausgebracht werden soll; und
b) wobei die Benutzerschnittstelle (23) zur Ausgabe einer Konfiguration (25) der Ausbringelemente ausgebildet ist, wobei die Konfiguration (25) eine in Abhängigkeit von den Eingabe-Parametern ermittelte Ausstattung des zumindest einen Teils der Ausbringelemente mit den Düsenkappen (9b, 9c) für die reihenbezogene Ausbringung angibt.

11. Spritzvorrichtung (1) nach Anspruch 10, wobei die Konfiguration (25) Umbauhinweise (26) für einen Benutzer zur Verwendung der Düsenkappen enthält, um die Spritzvorrichtung an die reihenbezogene Anwendung anzupassen und/oder eine schematische visuelle Darstellung der mittels der Konfiguration erzeugbaren reihenbezogenen Ausbringung von Spritzflüssigkeit enthält.

12. Spritzvorrichtung (1) nach Anspruch 11, aufweisend ein Dosier- und/oder Versorgungssystem zur Versorgung der Ausbringelemente mit Spritzflüssigkeit und eine Steuereinrichtung, die ausgebildet ist, für die reihenbezogene Ausbringung von Spritzflüssigkeit das Dosier- und/oder Versorgungssystem und/oder die Ausbringelemente in Abhängigkeit von der Konfiguration der Ausbringelemente zu steuern und/oder zu regeln.

13. Spritzvorrichtung (1) nach einem der vorherigen Ansprüche, wobei die Düsenkappen
a) jeweils ausgebildet sind, zur Erzeugung des Versatzes eine von dem Ausbringelement gerade nach unten ausgebrachte Spritzflüssigkeit derart abzulenken, dass ein Spritzstrahl mit einer schräg nach unten gerichteten Strahlrichtung erzeugt wird; und/oder
b) jeweils mittels eines Klick-, Rast- und/oder Bajonett-Verschlusses lösbar an einem Ausbringelement montierbar sind.

14. Landwirtschaftliche Feldspritze (100), umfassend eine Spritzvorrichtung (1) nach einem der vorherigen Ansprüche, wobei die Feldspritze beispielsweise eine selbstfahrende oder eine mittels eines Zugfahrzeugs gezogene oder eine an ein Zugfahrzeug angebaute Feldspritze ist.

15. Verfahren zur Anpassung einer Spritzvorrichtung für eine reihenbezogene Ausbringung von Spritzflüssigkeit,
wobei die Spritzvorrichtung eine Spritzvorrichtung (1) für eine landwirtschaftliche Feldspritze zum dosierten Ausbringen von Spritzflüssigkeit auf landwirtschaftlichen Nutzflächen ist, umfassend mehrere Ausbringelemente zum Versprühen und/oder Feinverteilen der Spritzflüssigkeit, die in einem vorbestimmten Düsenraster in Längsrichtung eines Spritzgestänges beabstandet voneinander angeordnet sind,
wobei das Verfahren umfasst:
Anpassen von Auftreffbereichen (10) der von den Ausbringelementen während eines Ausbringvorgangs abgegebenen Spritzflüssigkeit an ein Reihenraster der reihenbezogenen Ausbringung, indem ein Versatz in Längsrichtung des Spritzgestänges von Auftreffbereichen von Spritzflüssigkeit mittels Düsenkappen erzeugt wird.

16. Verfahren nach Anspruch 15, wobei zumindest ein Teil der mehreren Ausbringelemente zur Ausstattung mit Düsenkappen ausgewählt wird und die Düsenkappen so ausgebildet sind,
a) dass ein Unterschied zwischen dem Düsenrasterabstand und dem Abstand (30) der Pflanzenreihen (31) ausgeglichen wird; und/oder
b) dass eine Beabstandung der angepassten Auftreffbereiche (10) einem Reihenabstand (30) einer Pflanzenreihe (31) entspricht; und/oder
c) dass eine Beabstandung der angepassten Auftreffbereiche und/oder ein Reihenabstand der reihenbezogenen Ausbringung weder 25 cm oder 50 cm noch ein ganzzahlig Vielfaches hiervon beträgt.

17. Verfahren nach Anspruch 15 oder 16, wobei die Spritzvorrichtung eine Spritzvorrichtung gemäß einem der Ansprüche 1 bis 13 ist.

## Claims

1. Spraying device (1) for an agricultural field sprayer (100) for the metered application of spray liquid on agricultural land, preferably for row-related band spraying, comprising
a sprayer boom (2) comprising a plurality of application elements (4a, 4b, 4c) for spraying and/or finely distributing the spray liquid, which are arranged at a predetermined nozzle grid spacing (5) at a distance from one another in the longitudinal direction (B) of the sprayer boom (2),
wherein impact areas (6) of the spray liquid discharged by the application elements (4a, 4b, 4c) during a discharge operation form a row grid (7), the row grid spacing (8) of which differs from the nozzle grid spacing (5) or from an integer multiple of the nozzle grid spacing (5), wherein, in order to produce the different row grid spacing (8), at least some of the plurality of application elements (4b, 4c) are each equipped with a nozzle cap (9b, 9c) which is configured to produce an offset (10b; 10c) of an impact area (6) of spray liquid in the longitudinal direction (B) of the spray boom (2).

2. Spraying device (1) according to claim 1, wherein the nozzle caps (9b, 9c) comprise at least a first group of nozzle caps (9b) and a second group of nozzle caps (9c), wherein the nozzle caps (9b) of the first group are configured to produce a first offset (10b) of the impact area (6) of spray liquid in the longitudinal direction (V) of the spray boom (2), which offset differs from a second offset (10c) which can be produced by means of the nozzle caps (9c) of the second group.

3. Spraying device (1) according to claim 2, wherein
a) an offset (10b) of 5 cm or an offset in a range of 0 to 5 cm can be produced by means of the nozzle caps (9b) of the first group; and/or
b) an offset (10c) of 10 cm or an offset in a range of 5 to 10 cm can be produced by means of the nozzle caps (9c) of the second group; and/or
c) wherein the nozzle caps comprise a third group of nozzle caps, wherein an offset of 15 cm or an offset in a range of 10 to 15 cm can be produced by means of the nozzle caps of the third group.

4. Spraying device (1) according to one of the previous claims, wherein the nozzle caps (9b, 9c) can each be selectively mounted in a first mounting position (11a) on the application element (4b, 4c) and in a second mounting position (11b) on the application element (4b, 4c), wherein the nozzle caps (9b, 9c) in the first mounting position (11a) produce a positive offset and in the second mounting position (11b) a negative offset of the impact area (10) in the longitudinal direction (B) of the spray boom (2).

5. The injection device (1) according to claim 4, when dependent on claim 2 or 3, wherein the nozzle caps (9b, 9c) of the first group and the second group each comprise nozzle caps (9b, 9c) mounted in the first mounting position (11a) and comprise nozzle caps (9b, 9c) mounted in the second mounting position (11b).

6. Spraying device (1) according to any of the previous claims, wherein the application elements (4b, 4c) equipped with nozzle caps (9b, 9c) are rotatably supported in a nozzle carrier for setting the offset (10b, 10c) or a width of the spray profile in a predetermined portion.

7. Spraying device (1) according to one of the previous claims, wherein the plurality of application elements (4b, 4c) are rotatably mounted on the nozzle carrier in different detent and/or click positions for setting the offset (10b, 10c) by means of the different detent and/or click positions.

8. Spraying device (1) according to claim 6 or 7, wherein a scale is provided on the nozzle carrier or on the application element, by means of which a set rotational position and/or a set offset can be read off.

9. Spraying device (1) according to one of the previous claims, further comprising multiple nozzle carriers in which at least two application elements are mounted,
a) which are equipped with different nozzle caps for generating a different offset of the impact area; or
b) of which one application element is equipped without a nozzle cap or is equipped with a nozzle cap which does not produce an offset of the impact area in longitudinal direction.

10. Spraying device (1) according to one of the previous claims, comprising a control unit (20) comprising a screen (21) configured to cause the display of a user interface (23) on the screen (21) for configuring the spraying device for a row-wise application,
a) wherein the user interface for entering input parameters (24) is configured to detect, in addition to a row spacing, at least one of the following further input parameters: a nozzle grid spacing, a track width, a working width of the field sprayer, a crop to be treated, a growth phase of the crop to be treated, and a parameter indicating whether additional spraying liquid is to be applied between the rows; and
b) wherein the user interface (23) is configured to output a configuration (25) of the application elements, wherein the configuration (25) indicates a configuration of the at least one part of the application elements with the nozzle caps (9b, 9c) determined as a function of the input parameters for the row-related application.

11. Spraying device (1) according to claim 10, wherein the configuration (25) contains conversion instructions (26) for a user for using the nozzle caps in order to adapt the spraying device to the row-related application and/or contains a schematic visual representation of the row-related application of spraying liquid that can be generated by means of the configuration.

12. Spraying device (1) according to claim 11, comprising a metering and/or supply system for supplying the application elements with spraying liquid and a control means which is configured to control and/or regulate the metering and/or supply system and/or the application elements for the row-related application of spraying liquid as a function of the configuration of the application elements.

13. Spraying device (1) according to one of the previous claims, wherein the nozzle caps
a) are each configured to deflect a spray liquid discharged straight downwards by the discharge element in such a way that a spray jet is produced with a jet direction directed obliquely downwards in order to produce the offset; and/or
b) are each detachably mountable on an application element by means of a click, snap-in and/or bayonet lock.

14. Agricultural field sprayer (100), comprising a spraying device (1) according to one of the previous claims, wherein the field sprayer is, for example, a self-propelled field sprayer or a field sprayer towed by means of a towing vehicle or a field sprayer attached to a towing vehicle.

15. Method for adapting a spraying device for a row-related application of spraying liquid,
wherein the spraying device is a spraying device (1) for an agricultural field sprayer for the metered application of spray liquid on agricultural land, comprising a plurality of application elements for spraying and/or finely distributing the spray liquid, which are arranged spaced apart from one another in a predetermined nozzle grid in the longitudinal direction of a spray boom,
wherein the method comprises
Adapting impact areas (10) of the spray liquid discharged by the application elements during an application process to a row grid of the row-related application by creating an offset in the longitudinal direction of the spray boom of impact areas of spray liquid by means of nozzle caps.

16. Method according to claim 15, wherein at least a part of the plurality of application elements is selected to be equipped with nozzle caps and the nozzle caps are configured as follows
a) that a difference between the nozzle grid spacing and the spacing (30) of the plant rows (31) is equalised; and/or
b) that a spacing of the adapted impact areas (10) corresponds to a row spacing (30) of a plant row (31); and/or
c) that a spacing of the adapted impact areas and/or a row spacing of the row-related application is neither 25 cm or 50 cm nor an integer multiple thereof.

17. The method according to claim 15 or 16, wherein the spraying device is a spraying device according to any one of claims 1 to 13.

## Revendications

1. Dispositif de pulvérisation (1) destiné à un pulvérisateur (100) agricole destiné à la distribution dosée d'un liquide de pulvérisation sur des surfaces agricoles utiles, de préférence pour la pulvérisation de bandes en rangées, comprenant
une rampe de pulvérisation (2), comportant plusieurs éléments de distribution (4a, 4b, 4c) pour pulvériser et/ou répartir avec précision le liquide de pulvérisation, qui sont disposés à distance les uns des autres à un espacement de grilles de buses (5) prédéfini dans le sens longitudinal (B) de la rampe de pulvérisation (2),
des zones d'impact (6) du liquide de pulvérisation envoyé par les éléments de distribution (4a, 4b, 4c) formant, pendant une opération de distribution, une grille de rangées (7) dont l'espacement (8) de grilles de rangées diffère de l'espacement de grilles de buses (5) ou d'un multiple entier de l'espacement de grilles de buses (5), au moins une partie des plusieurs éléments de distribution (4b, 4c) étant équipée, pour produire l'espacement (8) de grilles de rangées différent, d'un cache de buse (9b, 9c) qui est formé pour produire un décalage (10b ; 10c) d'une zone d'impact (6) par rapport au liquide de pulvérisation dans le sens longitudinal (B) de la rampe de pulvérisation (2).

2. Dispositif de pulvérisation (1) selon la revendication 1, les caches de buse (9b, 9c) comprenant au moins un premier groupe de caches de buse (9b) et un deuxième groupe de caches de buse (9c), les caches de buse (9b) du premier groupe étant formés pour produire, dans le sens longitudinal (V) de la rampe de pulvérisation (2), un premier décalage (10b) de la zone d'impact (6) par rapport au liquide de pulvérisation, qui diffère d'un deuxième décalage (10c), qui peut être produit au moyen des caches de buse (9c) du deuxième groupe.

3. Dispositif de pulvérisation (1) selon la revendication 2,
a) un décalage (10b) de 5 cm ou un décalage dans une plage de 0 à 5 cm pouvant être produit au moyen des caches de buse (9b) du premier groupe ; et/ou
b) un décalage (10c) de 10 cm ou un décalage dans une plage de 5 à 10 cm pouvant être produit au moyen des caches de buse (9c) du deuxième groupe ; et/ou
c) les caches de buse comportant un troisième groupe de caches de buse, un décalage de 15 cm ou un décalage dans une plage de 10 à 15 cm pouvant être produit au moyen des caches de buse du troisième groupe.

4. Dispositif de pulvérisation (1) selon l'une des revendications précédentes, les caches de buse (9b, 9c)° pouvant être montés chacun au choix, dans une première position de montage (11a), sur l'élément de distribution (4b, 4c) et, dans une deuxième position de montage (11b) tournée de 180 degrés par rapport à la première position de montage (11a), sur l'élément de distribution (4b, 4c), les caches de buse (9b, 9c) produisant un décalage positif dans la première position de montage (11a) et un décalage négatif de la zone d'impact (10) dans le sens longitudinal (B) de la rampe de pulvérisation (2) dans la deuxième position de montage (11b).

5. Dispositif de pulvérisation (1) selon la revendication 4, lorsqu'elle dépend de la revendication 2 ou 3, les caches de buse (9b, 9c) du premier groupe et du deuxième groupe comprenant chacun des caches de buse (9b, 9c) qui sont montés dans la première position de montage (11a) et comprenant des caches de buse (9b, 9c) qui sont montés dans la deuxième position de montage (11b).

6. Dispositif de pulvérisation (1) selon l'une des revendications précédentes, les éléments de distribution (4b, 4c) équipés de caches de buse (9b, 9c) étant maintenus de manière à pouvoir tourner dans un porte-buses pour régler le décalage (10b, 10c) ou une largeur du profil de pulvérisation dans une plage prédéfinie.

7. Dispositif de pulvérisation (1) selon l'une des revendications précédentes, les plusieurs éléments de distribution (4b, 4c) étant maintenus de manière à pouvoir tourner sur le porte-buses dans différentes positions d'enclenchement et/ou d'encliquetage pour régler le décalage (10b, 10c) au moyen des différentes positions d'enclenchement et/ou d'encliquetage.

8. Dispositif de pulvérisation (1) selon la revendication 6 ou 7, une échelle étant installée sur le porte-buses ou sur l'élément de distribution, laquelle permet de lire une position de rotation réglée et/ou un décalage réglé.

9. Dispositif de pulvérisation (1) selon l'une des revendications précédentes, comportant en outre des porte-buses multiples, dans lesquels au moins deux éléments de distribution sont maintenus,
a) qui sont équipés de caches de buse différents pour produire un décalage différent de la zone d'impact ; ou
b) dont un élément de distribution n'est pas équipé d'un cache de buse ou est équipé d'un cache de buse qui ne produit pas de décalage de la zone d'impact dans le sens longitudinal.

10. Dispositif de pulvérisation (1) selon l'une des revendications précédentes, comprenant une unité de commande (20), comportant un écran (21) qui est formé pour entraîner l'affichage d'une interface utilisateur (23) sur l'écran (21) pour configurer le dispositif de pulvérisation pour une distribution en rangées,
a) l'interface utilisateur destinée à entrer des paramètres d'entrée (24) étant formée pour détecter, en complément d'un espacement de rangées, au moins un des paramètres d'entrée suivants : un espacement de grilles de buses, une largeur de voie, une largeur de travail du pulvérisateur, une culture à traiter, une phase de croissance de la culture à traiter, et un paramètre qui indique si du liquide de pulvérisation supplémentaire doit être distribué entre les rangées ; et
b) l'interface utilisateur (23) étant formée pour délivrer en sortie une configuration (25) des éléments de distribution, la configuration (25) indiquant un équipement, déterminé en fonction des paramètres d'entrée, de l'au moins une partie des éléments de distribution avec les caches de buse (9b, 9c) pour la distribution en rangées.

11. Dispositif de pulvérisation (1) selon la revendication 10, la configuration (25) contenant des instructions de transformation (26) destinées à un utilisateur pour l'utilisation des caches de buse pour adapter le dispositif de pulvérisation à la distribution en rangées et/ou contenant une représentation visuelle schématique de la distribution en rangées de liquide de pulvérisation pouvant être produite au moyen de la configuration.

12. Dispositif de pulvérisation (1) selon la revendication 11, comportant un système de dosage et/ou d'alimentation pour alimenter les éléments de distribution en liquide de pulvérisation et un équipement de commande qui est formé pour commander et/ou réguler le système de dosage et/ou d'alimentation et/ou les éléments de distribution en fonction de la configuration des éléments de distribution pour la distribution en rangées de liquide de pulvérisation.

13. Dispositif de pulvérisation (1) selon l'une des revendications précédentes, les caches de buse
a) étant chacun formés pour dévier un liquide de pulvérisation distribué précisément vers le bas par l'élément de distribution pour produire le décalage de telle manière qu'un jet de pulvérisation est produit avec une direction de jet dirigée à l'oblique vers le bas ; et/ou
b) pouvant être montés de manière amovible sur un élément de distribution chacun au moyen d'une fermeture à encliquetage, à enclenchement et/ou à baïonnette.

14. Pulvérisateur (100) agricole, comprenant un dispositif de pulvérisation (1) selon l'une des revendications précédentes, le pulvérisateur étant par exemple un pulvérisateur automoteur ou un pulvérisateur tracté au moyen d'un véhicule tracteur ou un pulvérisateur monté sur un véhicule tracteur.

15. Procédé destiné à adapter un dispositif de pulvérisation pour une distribution en rangées de liquide de pulvérisation,
le dispositif de pulvérisation étant un dispositif de pulvérisation (1) pour un pulvérisateur agricole destiné à la distribution dosée de liquide de pulvérisation sur des surfaces agricoles utiles, comprenant plusieurs éléments de distribution pour pulvériser et/ou répartir avec précision le liquide de pulvérisation, qui sont disposés à distance les uns des autres dans une grille de buse prédéfinie dans le sens longitudinal d'une rampe de pulvérisation,
le procédé comprenant :
adaptation de zones d'impact (10) du liquide de pulvérisation envoyé par les éléments de distribution pendant une opération de distribution à une grille de rangées de la distribution en rangées, en ce qu'un décalage dans le sens longitudinal de la rampe de pulvérisation par rapport à des zones d'impact du liquide de pulvérisation est produit au moyen de caches de buse.

16. Procédé selon la revendication 15, au moins une partie des plusieurs éléments de distribution à équiper avec des caches de buse étant choisie et les caches de buse étant formés de telle sorte
a) qu'une différence entre l'espacement de grilles de buses et l'espacement (30) des rangées de cultures (31) est compensée ; et/ou
b) qu'un espacement des zones d'impact (10) adaptées correspond à un espacement de rangées (30) d'une rangée de cultures (31) ; et/ou
c) qu'un espacement des zones d'impact adaptées et/ou un espacement de rangées de la distribution en rangées n'est ni de 25 cm ni de 50 cm, ni d'un multiple entier desdites valeurs.

17. Procédé selon la revendication 15 ou 16, le dispositif de pulvérisation étant un dispositif de pulvérisation selon l'une des revendications 1 à 13.
